# EUROPEAN PATENT SPECIFICATION

(11) **EP 2 683 465 B1**
(45) Date of publication and mention of the grant of the patent: **16.05.2018**
(21) Application number: 11860244.0
(22) Date of filing: 10.03.2011
(51) Int. Cl.: B01D 53/62, B01D 53/40, B01D 53/14, C10K 1/08

(54) **PROCESSES AND SYSTEMS FOR REMOVING ACID GAS FROM SYNGAS**
VERFAHREN UND SYSTEME ZUM ENTFERNEN VON SÄUREGAS AUS SYNTHESEGAS
PROCÉDÉS ET SYSTÈMES D'ÉLIMINATION DE GAZ ACIDES DE GAZ DE SYNTHÈSE

(43) Date of publication of application: 15.01.2014
(73) Proprietor: Uop LLC, Des Plaines, Illinois 60017 (US)
(72) Inventor: DAVIS, Lamar, West Dundee, Illinois 60118 (US); BOEHM, Ernest, Hanover Park, Illinois 60133 (US); PALLA, Nagaraju, Woodridge, Illinois 60517 (US); GILLIS, Daniel, Houston, Texas 77094 (US)
(74) Representative: Boult Wade Tennant
(86) International application number: PCT/US2011/027884
(87) International publication number: WO 2012/121727

(56) References cited:
- WO-A1-2010/039785
- US-A- 5 233 837
- US-A1- 2005 172 807
- US-A1- 2007 231 244
- US-A1- 2008 210 092
- US-A1- 2009 101 007
- US-A1- 2010 111 784

## Description

### FIELD OF THE INVENTION

The present invention relates generally to processes and systems for acid gas removal from synthesis gas, and more particularly relates to processes and systems for removing from synthesis gas acid gas to form a carbon dioxide-ultra-rich product stream.

### BACKGROUND OF THE INVENTION

Acid gas removal processes and systems are widely used in the gas processing industries to separate acid gases from synthesis gas (hereinafter "syngas"). Syngas streams can be produced, for example, by gasification of coal, coke, or heavy hydrocarbon oils. Some examples of acid gases are hydrogen sulfide (H₂S), carbonyl sulfide (COS) and other sulfur compounds, carbon dioxide (CO₂), and hydrogen cyanide (HCN). By separating the acid gases, the syngas stream is made more suitable for combustion and/or further processing (see, for instance, WO 2010/039785 and US 2010/111784).

The acid gases removed from the syngas may be passed along in one or more gas streams. Typically, at least one of the gas streams has a relatively high carbon dioxide content, such as, for example, up to greater than 99 weight percent of the gas stream. This carbon dioxide-rich gas stream may be removed from the gas process, for example, by being exhausted into the atmosphere, sequestered, and/or the like. The carbon dioxide-rich gas stream also contains other residual gases including carbon monoxide, which is considered a toxic gas. Carbon monoxide emissions are regulated typically with annual limits on the amount of carbon monoxide that may be exhausted and/or sequestered from a process facility. Unfortunately, many of the process facilities that gasify coal, coke, heavy hydrocarbon oils, or generate syngas via another process, produce such large quantities of carbon dioxide that even a relatively low amount of carbon monoxide in the carbon dioxide-rich gas stream can result in the process facility reaching and possibly exceeding their carbon monoxide emission limits very quickly. In such cases, the process facility may be subject to large fines and/or restricted from operating for a period of time.

Accordingly, it is desirable to provide processes and systems for removing acid gas including carbon dioxide from syngas to produce a carbon dioxide-rich product stream with an ultra high content of carbon dioxide. Moreover, it is desirable to provide processes and systems for removing acid gas including carbon dioxide from syngas to produce a carbon dioxide-rich product stream with very little carbon monoxide. Furthermore, other desirable features and characteristics of the present invention will become apparent from the subsequent Detailed Description of the Invention and the appended Claims, when taken in conjunction with the accompanying drawings and this Background of the Invention.

### SUMMARY OF THE INVENTION

Processes and systems for removing acid gas including carbon dioxide from syngas are provided herein. In accordance with an exemplary embodiment, a process for removing acid gas comprises the steps of separating the acid gas from the syngas using an absorbent solvent to form a treated syngas stream and a carbon dioxide-rich solvent stream. Carbon dioxide and residual gas is flashed from the carbon dioxide-rich solvent stream to form a carbon dioxide-rich flash stream. The carbon dioxide-rich flash stream is compressed to a predetermined high pressure. The carbon dioxide-rich flash stream is cooled and expanded to a predetermined low temperature and pressure to form a cooled expanded carbon dioxide-rich flash stream. The cooled expanded carbon dioxide-rich flash stream is fractionated to form a carbon dioxide-ultra-rich product stream and a residual gas stream.

In accordance with another exemplary embodiment, a system for removing acid gas including carbon dioxide from syngas is provided. The system comprises an absorbent solvent, and at least one gas absorber that is configured to separate the acid gas from the syngas using the absorbent solvent to form a treated syngas stream and a carbon dioxide-rich solvent stream. At least one carbon dioxide flash drum is in fluid communication with the at least one gas absorber and is configured to flash carbon dioxide and residual gas from the carbon dioxide-rich solvent stream to form a carbon dioxide-rich flash stream. At least one compressor is in fluid communication with the at least one carbon dioxide flash drum and is configured to compress the carbon dioxide-rich flash stream to a predetermined high pressure. At least one cooling unit and an expander are in fluid communication with each other and with the at least one compressor. The at least one cooling unit and the expander are cooperatively configured to cool and expand the carbon dioxide-rich flash stream to a predetermined low temperature and pressure to form a cooled expanded carbon dioxide-rich flash stream. A fractionation unit is in fluid communication with the expander and is configured to fractionate the cooled expanded carbon dioxide-rich flash stream to form a carbon dioxide-ultra-rich product stream and a residual gas stream.

### BRIEF DESCRIPTION OF THE DRAWINGS

Embodiments of the present invention will hereinafter be described in conjunction with the following drawing figures, wherein like numerals denote like elements, and wherein:
FIG. 1 schematically illustrates a system for removing acid gas from syngas in accordance with an exemplary embodiment;
FIG. 2 schematically illustrates a dehydration unit in accordance with an exemplary embodiment; and
FIG. 3 schematically illustrates a carbon dioxide fractionation and liquifaction arrangement in accordance with an exemplary embodiment.

### DETAILED DESCRIPTION

The following Detailed Description is merely exemplary in nature and is not intended to limit the invention or the application and uses of the invention. Furthermore, there is no intention to be bound by any theory presented in the preceding Description of Related Art or the following Detailed Description.

Various embodiments contemplated herein relate to processes and systems for removing acid gas including carbon dioxide from syngas. Acid gas is separated from syngas in at least one gas absorber using an absorbent solvent to form a treated syngas stream and a carbon dioxide-rich solvent stream. Carbon dioxide and some residual gases including carbon monoxide are flashed from the carbon dioxide-rich solvent stream in at least one carbon dioxide flash drum to form a carbon dioxide-rich flash stream. The carbon dioxide-rich flash stream is compressed to a predetermined high pressure, and cooled and expanded to a predetermined low temperature and pressure to form a cooled expanded carbon dioxide-rich flash stream. In an exemplary embodiment, the carbon dioxide-rich flash stream is liquefied when it is cooled and expanded to form the cooled expanded carbon dioxide-rich flash stream.

The cooled expanded carbon dioxide-rich flash stream is fractionated in a fractionation unit or column that separates carbon dioxide from the residual gases based on the relative differences in their vapor pressure and/or volatility to form a carbon dioxide-ultra-rich product stream and a residual gas stream that includes carbon monoxide. Preferably, the residual gas stream is in a gaseous phase and is collected from the top portion of the fractionation unit, and the carbon dioxide-ultra-rich product stream is in a liquid phase and is collected from the bottom portion of the fractionation unit. The inventors have found that by separating carbon dioxide from the residual gases based on their corresponding vapor pressures and/or volatilities via the fractionation unit, the carbon dioxide-ultra-rich product stream has a very high carbon dioxide content with ultra low amounts of carbon monoxide and/or other residual gases.

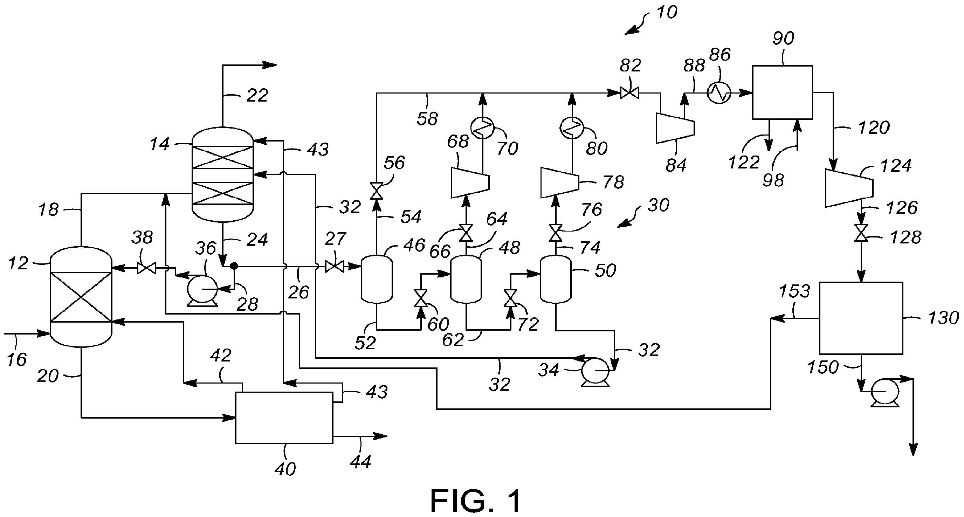

Referring to FIG. 1, a schematic depiction of a system 10 for removing acid gas including carbon dioxide from syngas in accordance with an exemplary embodiment is provided. The system 10 comprises a first gas absorber 12 and a second gas absorber 14. While two gas absorbers are shown, it will be appreciated that one or more than two gas absorbers can be used. A syngas feed stream 16 is introduced to the first gas absorber 12. The syngas feed stream 16 contains syngas and comprises, for example, hydrogen, carbon monoxide, water vapors, light hydrocarbons including methane, and various acid gases including hydrogen sulfide, carbonyl sulfide and other sulfur compounds, carbon dioxide, and hydrogen cyanide.

The first and second gas absorbers 12 and 14 cooperate in a two-stage counter-current flow process using an absorbent solvent that absorbs and removes the acid gases from the syngas feed stream 16. An example of a suitable absorbent solvent is a mixture of dimethyl ethers of polyethylene glycol, which is commercially available from Dow Chemical Company, located in Midland, Michigan, under the trade name Selexol®. Other absorbent solvents that absorb and/or remove acid gases from syngas may also be used.

In an exemplary embodiment, the first gas absorber 12 operates as the first stage of the two-stage counter-current flow process to remove hydrogen sulfide from the syngas feed stream 16, and can remove at least some carbon dioxide as well. The second gas absorber 14 operates as the second stage of the two-stage counter-current flow process to remove carbon dioxide from the syngas feed stream 16. In particular, the first gas absorber 12 removes acid gas including hydrogen sulfide from the syngas feed stream 16 using the absorbent solvent in counter-current flow against the rising syngas to produce an intermediate treated syngas stream 18 as an overhead stream and a hydrogen sulfide-rich solvent stream 20 as a bottom stream. The hydrogen sulfide-rich solvent stream 20 contains spent absorbent solvent comprising absorbent solvent with acid gas including hydrogen sulfide, some water, and residual gases including carbon monoxide, hydrogen, methane, and the like.

The hydrogen sulfide-rich solvent stream 20 is fluidly communicated to a hydrogen sulfide flash and solvent regeneration arrangement 40 to remove the absorbed acid gases and the residual gases from spent absorbent solvent as is well known in the art, producing a recycle flash gas stream 42, a regenerated solvent stream 43, and an acid gas stream 44. The recycle flash gas stream 42 has some hydrogen sulfide but contains mostly hydrogen, methane, carbon dioxide, carbon monoxide, water, and the like to increase the hydrogen sulfide in acid gas stream 44. The regenerated solvent stream 43 is passed along to the second gas absorbers 14 to replenish the absorbent solvent. The acid gas stream 44 is removed from the system 10 for further processing, exhausting, sequestering, and the like.

The intermediate treated syngas stream 18 is fluidly communicated to the second gas absorber 14. The second gas absorber 14 removes acid gas including carbon dioxide from the intermediate treated syngas stream 18 using the absorbent solvent in counter-current flow against the rising semi-treated syngas to produce a treated syngas stream 22 as an overhead stream and a carbon dioxide-rich solvent stream 24 as a bottom stream. The carbon dioxide-rich solvent stream 24 contains spent absorbent solvent comprising the absorbent solvent with acid gas including carbon dioxide, some water, and residual gases including carbon monoxide, hydrogen, methane, and the like.

The carbon dioxide-rich solvent stream 24 can be divided into at least two streams, including a solvent flash regeneration stream 26 and a return stream 28. As will be discussed in further detail below, the solvent flash regeneration stream 26 is passed through a valve 27 and undergoes flash regeneration in a solvent flash regeneration loop 30 to remove the absorbed acid gas and some of the residual gases from spent absorbent solvent and to produce a regenerated solvent stream 32. The regenerated solvent stream 32 is returned to the second gas absorber 14 via a pump 34 to replenish the absorbent solvent. The return stream 28 is passed along to the first gas absorber 12 via a pump 36 and through a valve 38 for absorbing additional acid gas in the first gas absorber 12.

As illustrated, the solvent flash regeneration loop 30 comprises a high-pressure carbon dioxide flash drum 46, a medium-pressure carbon dioxide flash drum 48, and a low-pressure carbon dioxide flash drum 50 that are in fluid communication with each other. The low-pressure carbon dioxide flash drum 50 can and often is operated at a pressure below 101.3 kPa or atmospheric pressures. While three carbon dioxide flash drums are shown, it will be appreciated that less than three or more than three carbon dioxide flash drums can be used. The solvent flash regeneration stream 26 is introduced to the high-pressure carbon dioxide flash drum 46. In an exemplary embodiment, the high-pressure carbon dioxide flash drum 46 is operating at a pressure of from about 1000 to about 2150 kPa and effectively releases carbon dioxide and some water and residual gases from the spent absorbent solvent to form a first semi-regenerated solvent stream 52 as a bottom stream and a first carbon dioxide-rich flash stream 54 as an overhead stream. Preferably, the first carbon dioxide-rich flash stream 54 is at a temperature of about 30 to about 55°C. The first carbon dioxide-rich flash stream 54 is passed through a valve 56 to line 58.

The first semi-regenerated solvent stream 52 is passed through a valve 60 and is introduced to the medium-pressure carbon dioxide flash drum 48. In an exemplary embodiment, the medium-pressure carbon dioxide flash drum 48 is operating at a pressure of from about 200 to about 550 kPa and effectively releases carbon dioxide and some water and residual gases from the first semi-regenerated solvent stream 52 to form a second semi-regenerated solvent stream 62 as a bottom stream and a second carbon dioxide-rich flash stream 64 as an overhead stream.

The second carbon dioxide-rich flash stream 64 is passed through a valve 66 to a compressor 68 and a cooling unit 70. The compressor 68 and the cooling unit 70 cooperate to compress and cool the second carbon dioxide-rich flash stream 64. Preferably, the compressor 68 and the cooling unit 70 compress and cool the second carbon dioxide-rich flash stream 64 to a pressure and temperature similar to that of the first carbon dioxide-rich flash stream 54. In one example, the second carbon dioxide-rich flash stream 64 is compressed and cooled to a pressure of from about 1000 to about 2150 kPa, and a temperature of from about 30 to about 55°C. The second carbon dioxide-rich flash stream 64 is combined with the first carbon dioxide-rich flash stream 54 along line 58.

The second regenerated solvent stream 62 is passed through valve 72 and is introduced to the low-pressure carbon dioxide flash drum 50. In an exemplary embodiment, the low-pressure carbon dioxide flash drum 50 is operating at a pressure of from about 150 kPa or less, and effectively releases carbon dioxide and some water and residual gases from the second semi-regenerated solvent stream 62 to form the regenerated solvent stream 32 as a bottom stream and a third carbon dioxide-rich flash stream 74 as an overhead stream.

The third carbon dioxide-rich flash stream 74 is passed through a valve 76 to a compressor 78 and a cooling unit 80. The compressor 78 and the cooling unit 80 cooperate to compress and cool the third carbon dioxide-rich flash stream 74. Preferably, the compressor 78 and the cooling unit 80 compress and cool the third carbon dioxide-rich flash stream 74 to a pressure and temperature similar to that of the first carbon dioxide-rich flash stream 54. In one example, the third carbon dioxide-rich flash stream 74 is compressed and cooled to a pressure of from about 1000 to about 2150 kPa and a temperature of from about 30 to about 55°C. The third carbon dioxide-rich flash stream 74 is combined with the first and second carbon dioxide-rich flash streams 54 and 64 along line 58.

As illustrated, the combined carbon dioxide-rich flash streams 54, 64, and 74 are passed along line 58 through valve 82 to a compressor 84 and a cooling unit 86. The compressor 84 compresses the carbon dioxide-rich flash streams 54, 64, and 74 to a predetermined intermediate high-pressure to form a first compressed carbon dioxide-rich flash stream 88. In an exemplary embodiment, the predetermined intermediate high-pressure is from about 2700 to about 4200 kPa. The cooling unit 86 cools the first compressed carbon dioxide-rich flash stream 88 including removing at least a portion of the heat produced by compressing the stream in the compressor 84. In an exemplary embodiment, the first compressed carbon dioxide-rich flash stream 88 is cooled to a temperature of from about 30 to about 55°C.

In an exemplary embodiment, the first compressed carbon dioxide-rich flash stream 88 is introduced to a dehydration unit 90. The dehydration unit 90 removes water from the first compressed carbon dioxide-rich flash stream 88 such that the flash stream 88 preferably has about 5 ppm, more preferably about 3 ppm, and most preferably about 1.5 ppm or less of water.

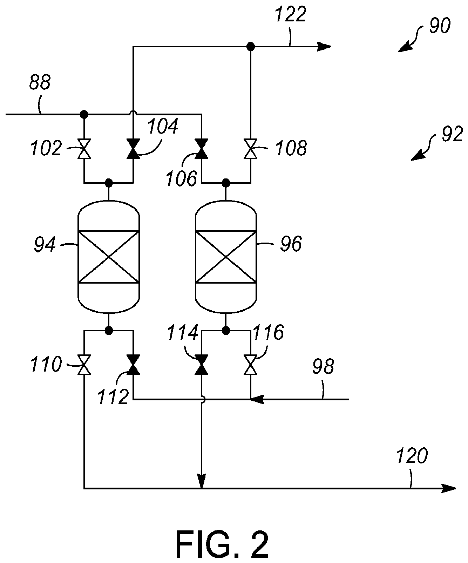

In an exemplary embodiment and with reference also to FIG. 2, the dehydration unit 90 may be configured as a swing bed arrangement 92 that comprises a first vessel 94 and a second vessel 96. While the swing bed arrangement 92 is shown having two vessels, it will be appreciated that more than two vessels can be used. The vessels 94 and 96 contain adsorbent material that effectively adsorbs water from the first compressed carbon dioxide-rich flash stream 88. Various adsorbent materials that may be used include molecular sieve materials, zeolites, and the like. Other adsorbent materials known to those skilled in the art for absorbing water may also be used.

In the scenario illustrated in FIG. 2, the first vessel 94 contains fresh adsorbent material and the second vessel 96 contains spent adsorbent material. The first and second vessels 94 and 96 are in selected fluid communication with the first compressed carbon dioxide-rich flash stream 88 and a regeneration gas stream 98 via a plurality of valves 102, 106, 112, and 116. The first compressed carbon dioxide-rich flash stream 88 is advanced to the first vessel 94 through the opened valve 102. Fluid communication of the first compressed carbon dioxide-rich flash stream 88 to the second vessel 96 is prevented by the closed valve 106. The regeneration gas stream 98 is advanced to the second vessel 96 through the opened valve 116, and is prevented from being fluidly communicated to the first vessel 94 by the closed valve 112.

In this example, the first vessel 94 containing the fresh adsorbent material removes water from the first compressed carbon dioxide-rich flash stream 88 to form a first compressed water-depleted carbon dioxide-rich flash stream 120. The spent adsorbent material in the second vessel 96 is regenerated by the regeneration gas stream 98, forming a spent regeneration gas stream 122. The first vessel 94 fluidly communicates the first compressed water-depleted carbon dioxide-rich flash stream 120 through the opened valve 110 where the closed valve 114 prevent intermixing with the regeneration gas stream 98 in the second vessel 96. The second vessel 96 fluidly communicates the spent regeneration gas stream 122 through the opened valve 108 where the closed valve 104 prevents intermixing with the first compressed carbon dioxide-rich flash stream 88 in the first vessel 94. When the adsorbent material in the first vessel 94 is spent and the spent adsorbent material in the second vessel 96 is regenerated, the valves 102-116 switch from opened to closed and vice versa to regenerate the adsorbent material in the first vessel 94 and to adsorbed water with the adsorbent material in the second vessel 96.

In an exemplary embodiment, the first and second vessels 94 and 96 also contain a second adsorbent material that is effective for absorbing hydrogen sulfide. In this scenario, the swing bed arrangement 92 operates as discussed in the foregoing paragraphs but with the additional removal of hydrogen sulfide from the first compress carbon dioxide-rich flash stream 88. Preferably, the additional removal of hydrogen sulfide from the first compressed carbon dioxide-rich flash stream 88 improves the overall carbon dioxide purity downstream in the final product carbon dioxide stream 150. Other arrangements for removing water and/or hydrogen sulfide from a carbon dioxide-rich stream known to those skilled in the art may also be used.

The first compressed water-depleted carbon dioxide-rich flash stream 120 is passed along to a compressor 124 and compressed to a predetermined high pressure to form a second compressed water-depleted carbon dioxide-rich flash stream 126. In an exemplary embodiment, the predetermined high pressure is from about 5500 to about 7600 kPa. The second compressed water-depleted carbon dioxide-rich flash stream 126 is passed through valve 128 to a carbon dioxide fractionation and liquifaction arrangement 130.

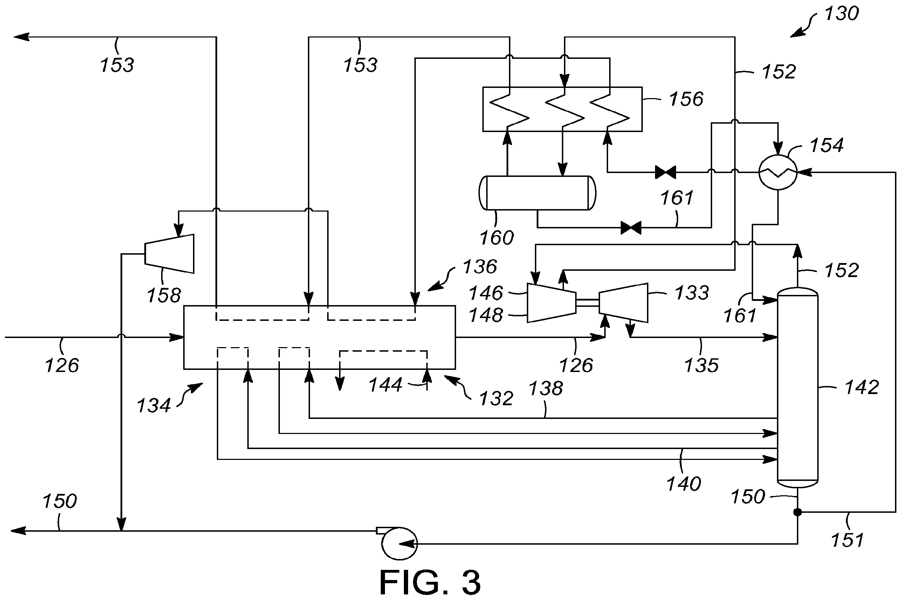

Referring now to Fig. 1 and FIG. 3, a schematic depiction of an exemplary embodiment of the carbon dioxide fractionation and liquifaction arrangement 130 is provided. The second compressed water-depleted carbon dioxide-rich flash stream 126 is passed through a cooling zone 132 to an expander 133. The cooling zone 132 and the expander 133 are cooperatively configured to cool and expand the flash stream 126 to a predetermined low temperature and pressure to form a cooled expanded carbon dioxide-rich flash stream 135 that is preferably in a liquid phase. In an exemplary embodiment, the predetermined low temperature and pressure include a temperature of about -40°C or less, and a pressure of from about 4100 to about 4900 kPa. Preferably, the second compressed water-depleted carbon dioxide-rich flash stream 126 contains at most trace amounts of water to minimize or eliminate any issues that may otherwise result by the presence of water in the flash stream 126 freezing.

In an exemplary embodiment, the cooling zone 132 comprises a first cooling unit 134 and a second cooling unit 136. While two cooling units are shown, it will be appreciated that one cooling unit or more than two cooling units may be used to cool the second compressed water-depleted carbon dioxide-rich flash stream 126. As illustrated, the first cooling unit 134 is configured as a heat exchanger using intermediate side streams 138 and 140 from a fractionation column 142 to provide cooling to the second compressed water-depleted carbon dioxide-rich flash stream 126. The second cooling unit 136 is configured as a refrigeration cooler that receives a refrigerant 144 for additional cooling of the second compressed water-depleted carbon dioxide-rich flash stream 126.

The cooled flash stream 126 is expanded and further cooled via the expander 133 to form the cooled expanded carbon dioxide-rich flash stream 135. The expander 133 is part of an expander-compressor train 146 that includes a compressor 148 operatively coupled to the expander 133. Expanding the second compressed water-depleted carbon dioxide-rich flash stream 126 via the expander 133 causes the expander-compressor train 146 to drive the compressor 148.

In an exemplary embodiment, the cooled expanded carbon dioxide-rich flash stream 135 is introduced to the fractionation column 142 that separates the components of the stream 135 based on the relative differences in their vapor pressure and/or volatility. The cooled expanded carbon dioxide-rich flash stream 135 is fractionated in the fractionation column 142 into a carbon dioxide-ultra-rich product stream 150 as a bottom stream that is preferably in a liquid phase and a residual gas stream 152 as an overhead stream that is preferably in a gaseous phase. In particular, the residual gases, such as, for example, hydrogen, carbon monoxide, methane and the like, rise to the top of the fractionation column 142 to form the residual gas stream 152, and carbon dioxide flows to the bottom of the fractionation column 142 to form the carbon dioxide-ultra-rich product stream 150. In an exemplary embodiment, the carbon dioxide-ultra-rich product stream 150 has a carbon dioxide content of about 99.5 mole percent (mole %), preferably about a 99.7 mole %, more preferably about 99.9 mole %, and most preferably about 99.99 mole %, or greater of the product stream. In another exemplary embodiment, the carbon dioxide-ultra-rich product stream 150 has about 100 parts per million (ppm), preferably about 90 ppm, more preferably about 80 ppm, and most preferably about 70 ppm, or less of carbon monoxide.

As illustrated, a portion of the carbon dioxide-ultra-rich product stream 150, which is preferably at a temperature of about -40°C or less, is split off as a slip stream 151 that is passed through a refrigerant sub-cooler 154 to provide cooling to the refrigerant sub-cooler 154. Then, the slipstream 151 is passed through a condenser 156 and advanced to the second cooling unit 136 to provide additional cooling to the second compressed water-depleted carbon dioxide-rich flash stream 126. In an exemplary embodiment, the slipstream 151 is further compressed in a compressor 158 to a pressure of preferably about 13,500 kPa or greater and returned to the carbon dioxide-ultra-rich product stream 150 for removal from the system 10 via exhausting, sequestering, and the like.

The residual gas stream 152 is fluidly communicated from the fractionation column 142 to the compressor 148 and compressed to a pressure of preferably about 2700 to about 4150 kPa. Then, the residual gas stream 152 is passed through the condenser 156 and advanced to an accumulator 160. From the accumulator 160, a liquid condensate stream 161 is split off and passed through the refrigerant sub cooler 154 for additional cooling. The cooled liquid condensate stream 161 is then passed back to the upper portion of the fractionation column 142.

A residual gas stream 153 is advanced from the accumulator 160, back through the condenser 156, and to the first cooling unit 134 for additional cooling of the second compressed water-depleted carbon dioxide-rich flash stream 126. In an exemplary embodiment, the residual gas stream 153 comprises hydrogen, carbon monoxide, and/or light hydrocarbons including methane that are suitable for combustion and/or further processing. As such, the residual gas stream 153 is preferably fluidly communicated from the first cooling unit 134 to the second gas absorber 14 to be combined with the syngas to form a portion of the treated syngas stream 22.

Accordingly, processes and systems for removing acid gas including carbon dioxide from syngas have been described. The various embodiments comprise separating acid gas from syngas in at least one gas absorber using an absorbent solvent to form a treated syngas stream and a carbon dioxide-rich solvent stream. Carbon dioxide and some residual gases including carbon monoxide are flashed from the carbon dioxide-rich solvent stream in at least one carbon dioxide flash drum to form a carbon dioxide-rich flash stream. The carbon dioxide-rich flash stream is compressed to a predetermined high pressure, and cooled and expanded to a predetermined low temperature and pressure to form a cooled expanded carbon dioxide-rich flash stream. The cooled expanded carbon dioxide-rich flash stream is fractionated in a fractionation unit that separates carbon dioxide from the residual gases based on their relative differences in vapor pressure and/or volatility to form a carbon dioxide-ultra-rich product stream and a residual gas stream that includes carbon monoxide. The inventors have found that by separating carbon dioxide from the residual gases based on their corresponding vapor pressures and/or volatilities via the fractionation unit, the carbon dioxide-ultra-rich product stream has a very high carbon dioxide content with ultra low amounts of carbon monoxide and other residual gases.

While at least one exemplary embodiment has been presented in the foregoing Detailed Description, it should be appreciated that a vast number of variations exist.

## Claims

1. A process for removing acid gas including carbon dioxide from syngas, the process comprising the steps of:
separating the acid gas from the syngas (16) using an absorbent solvent to form a treated syngas stream (22) and a carbon dioxide-rich solvent stream (24);
flashing carbon dioxide and residual gas from the carbon dioxide-rich solvent stream (24) to form a carbon dioxide-rich flash stream (54, 64, and 74);
compressing the carbon dioxide-rich flash stream (54, 64, and 74) to a predetermined high pressure;
cooling and expanding the carbon dioxide-rich flash stream (54, 64, and 74) to a predetermined low temperature and pressure to form a cooled expanded carbon dioxide-rich flash stream (135); and
fractionating the cooled expanded carbon dioxide-rich flash stream (135) to form a carbon dioxide-ultra-rich product stream (150) and a residual gas stream (152).

2. The process according to claim 1, wherein the step of compressing the carbon dioxide-rich flash stream (54, 64, and 74) includes compressing the carbon dioxide-rich flash stream to the predetermined high pressure of from 5500 to 7600 kPa.

3. The process according to claim 1, wherein the step of cooling and expanding the carbon dioxide-rich flash stream (54, 64, and 74) includes cooling the carbon dioxide-rich flash stream to a temperature of -40°C or less.

4. The process according to claim 1, wherein the step of cooling and expanding the carbon dioxide-rich flash stream (54, 64, and 74) includes expanding the carbon dioxide-rich flash stream to a pressure of from 4100 to 4900 kPa.

5. The process according to claim 1, wherein the step of fractionating the cooled expanded carbon dioxide-rich flash stream (135) includes forming the residual gas stream (152) comprising gas selected from the group consisting of hydrogen, carbon monoxide, methane, and mixtures thereof.

6. The process according to claim 1, wherein the step of fractionating the cooled expanded carbon dioxide-rich flash stream (135) includes forming the carbon dioxide-ultra-rich product stream (150) having a carbon dioxide content of 99.5 mole % or greater.

7. The process according to claim 1, wherein the step of fractionating the cooled expanded carbon dioxide-rich flash stream (135) includes forming the carbon dioxide-ultra-rich product stream (150) having 100 ppm of carbon monoxide or less.

8. The process according to claim 1, further comprising the step of removing water from the carbon dioxide-rich flash stream (54, 64, and 74) prior to the step of cooling and expanding the carbon dioxide-rich flash stream (54, 64, and 74).

9. The process according to claim 8, wherein the step of removing water includes removing water from the carbon dioxide-rich flash stream (54, 64, and 74) such that the carbon dioxide-rich flash stream (54, 64, and 74) has 5 ppm of water or less.

10. The process according to claim 8, further comprising the step of compressing the carbon dioxide-rich flash stream (54, 64, and 74) to a predetermined intermediate pressure prior to the step of removing water.

11. The process according to claim 10, further comprising the step of cooling the carbon dioxide-rich flash stream (54, 64, and 74) to a predetermined intermediate temperature prior to the step of removing water and after the step of compressing the carbon dioxide-rich flash stream (54, 64, and 74) to the predetermined intermediate pressure.

12. The process according to claim 8, wherein the step of removing water includes removing water from the carbon dioxide-rich flash stream (54, 64, and 74) with a first adsorbent material that is contained in a dehydration unit (90) and is effective for adsorbing water, and wherein the dehydration unit (90) also contains a second adsorbent material effective for adsorbing hydrogen sulfide, and the process further comprises the step of removing hydrogen sulfide from the carbon dioxide-rich flash stream with the second adsorbent material in the dehydration unit (90).

13. The process according to claim 1, wherein the step of separating the acid gas from the syngas includes separating hydrogen sulfide from the syngas in a first gas absorber (12) to form an intermediate treated syngas stream that is fluidly communicated to a second gas absorber (14), and separating carbon dioxide from the intermediate treated syngas stream (18) in the second gas absorber (14) with the absorbent solvent to form the carbon dioxide-rich solvent stream (24).

14. The process according to claim 13, further comprising the step of fluidly communicating the residual gas stream (152, 153) to the second gas absorber (14) to form at least a portion of the treated syngas stream (22).

15. The process according to claim 1, wherein the step of fractionating the cooled expanded carbon dioxide-rich flash stream (135) includes forming the carbon dioxide-ultra-rich product stream (150) having a temperature of -40°C or less.

16. The process according to claim 1, further comprising the step of compressing the carbon dioxide-ultra-rich product stream (150) to a pressure of 13,500 kPa or greater.

17. A system (10) for removing acid gas including carbon dioxide from syngas, the system comprising:
an absorbent solvent;
at least one gas absorber (14) configured to separate the acid gas from the syngas (16) using the absorbent solvent to form a treated syngas stream (22) and a carbon dioxide-rich solvent stream (24);
at least one carbon dioxide flash drum (46, 48, and 50) in fluid communication with the at least one gas absorber (14) and configured to flash carbon dioxide and residual gas from the carbon dioxide-rich solvent stream (24) to form a carbon dioxide-rich flash stream (54, 64, and 74);
at least one compressor (68, 78, and 84) in fluid communication with the at least one carbon dioxide flash drum (46, 48, and 50) and configured to compress the carbon dioxide-rich flash stream (54, 64, and 74) to a predetermined high pressure;
at least one cooling unit (70, 80, 86, 134, and 136) and an expander (133) that are in fluid communication with each other and with the at least one compressor (68, 78, and 84), the at least one cooling unit (70, 80, 86, 134, and 136) and the expander (133) cooperatively configured to cool and expand the carbon dioxide-rich flash stream (54, 64, and 74) to a predetermined low temperature and pressure to form a cooled expanded carbon dioxide-rich flash stream (135); and
a fractionation unit (142) in fluid communication with the expander (133) and configured to fractionate the cooled expanded carbon dioxide-rich flash stream (135) to form a carbon dioxide-ultra-rich product stream (150) and a residual gas stream (152).

18. The system (10) according to claim 17, further comprising a dehydration unit (90) in fluid communication with the at least one compressor (68, 78, and 84) and the at least one cooling unit (70, 80, 86, 134, and 136), the dehydration unit (90) configured to remove water from the carbon dioxide-rich flash stream (54, 64, and 74).

19. The system (10) according to claim 18, wherein the dehydrating unit (90) is configured as a swing bed arrangement (92) that comprises at least two vessels (94 and 96), the at least two vessels (94 and 96) each containing a first adsorbent material and a second adsorbent material that are effective for removing water and hydrogen sulfide, respectively, from the carbon dioxide-rich flash stream (54, 64, and 74).

20. The system according to claim 17, wherein the at least one gas absorber (14) comprises a first gas absorber (12) and a second gas absorber (14) that is in fluid communication with the first gas absorber (12), the first gas absorber (12) is configured to separate hydrogen sulfide from the syngas (16) to form an intermediate treated syngas stream (18), and the second gas absorber (14) is configured to separate carbon dioxide from the intermediate treated syngas stream (18) using the absorbent solvent, and wherein the second gas absorber (14) is in fluid communication with the fractionation unit (142) to receive the residual gas stream (152, 153).

## Patentansprüche

1. Verfahren zum Entfernen von Sauergas, das Kohlendioxid aufweist, aus Syngas, wobei das Verfahren die folgenden Schritte umfasst:
Abscheiden des Sauergases aus dem Syngas (16) unter Verwendung eines absorbierenden Lösungsmittels, um einen behandelten Syngasstrom (22) und einen kohlendioxidreichen Lösungsmittelstrom (24) zu bilden;
Abdampfen von Kohlendioxid und Restgas aus dem kohlendioxidreichen Lösungsmittelstrom (24) zum Bilden eines kohlendioxidreichen Flashstroms (54, 64 und 74);
Verdichten des kohlendioxidreichen Flashstroms (54, 64 und 74) auf einen vorbestimmten hohen Druck;
Kühlen und Expandieren des kohlendioxidreichen Flashstroms (54, 64 und 74) auf eine vorbestimmte niedrige Temperatur und Druck zum Bilden eines gekühlten expandierten kohlendioxidreichen Flashstroms (135); und
Fraktionieren des abgekühlten expandierten kohlendioxidreichen Flashstroms (135) zum Bilden eines kohlendioxidsuperreichen Produktstroms (150) und eines Restgasstroms (152).

2. Verfahren nach Anspruch 1, wobei der Schritt des Verdichtens des kohlendioxidreichen Flashstroms (54, 64 und 74) das Verdichten des kohlendioxidreichen Flashstroms auf den vorbestimmten hohen Druck von 5500 bis 7600 kPa beinhaltet.

3. Verfahren nach Anspruch 1, wobei der Schritt des Kühlens und Expandierens des kohlendioxidreichen Flashstroms (54, 64 und 74) das Kühlen des kohlendioxidreichen Flashstroms auf eine Temperatur von -40°C oder weniger beinhaltet.

4. Verfahren nach Anspruch 1, wobei der Schritt des Kühlens und Expandierens des kohlendioxidreichen Flashstroms (54, 64 und 74) das Expandieren des kohlendioxidreichen Flashstroms auf einen Druck von 4100 bis 4900 kPa beinhaltet.

5. Verfahren nach Anspruch 1, wobei der Schritt des Auftrennens des abgekühlten expandierten kohlendioxidreichen Flashstroms (135) das Bilden des Restgasstroms (152) beinhaltet, der ein Gas umfasst, das ausgewählt ist aus der Gruppe bestehend aus Wasserstoff, Kohlenmonoxid, Methan und Mischungen davon.

6. Verfahren nach Anspruch 1, wobei der Schritt des Fraktionierens des abgekühlten expandierten kohlendioxidreichen Flashstroms (135) das Bilden des kohlendioxidsuperreichen Produktstroms (150) beinhaltet, der einen Kohlendioxidgehalt von 99,5 Mol-% oder mehr aufweist.

7. Verfahren nach Anspruch 1, wobei der Schritt des Fraktionierens des abgekühlten expandierten kohlendioxidreichen Flashstroms (135) das Bilden des kohlendioxidsuperreichen Produktstroms (150) beinhaltet, der 100 ppm Kohlenmonoxid oder weniger aufweist.

8. Verfahren nach Anspruch 1, ferner umfassend den Schritt des Entfernens von Wasser aus dem kohlendioxidreichen Flashstrom (54, 64 und 74) vor dem Schritt des Kühlens und Expandierens des kohlendioxidreichen Flashstroms (54, 64, und 74).

9. Verfahren nach Anspruch 8, wobei der Schritt des Entfernens von Wasser das Entfernen von Wasser aus dem kohlendioxidreichen Flashstrom (54, 64 und 74) beinhaltet, sodass der kohlendioxidreiche Flashstrom (54, 64 und 74) 5 ppm Wasser oder weniger aufweist.

10. Verfahren nach Anspruch 8, ferner umfassend den Schritt des Verdichtens des kohlendioxidreichen Flashstroms (54, 64 und 74) auf einen vorbestimmten Zwischendruck vor dem Schritt des Entfernens von Wasser.

11. Verfahren nach Anspruch 10, ferner umfassend den Schritt des Kühlens des kohlendioxidreichen Flashstroms (54, 64 und 74) auf eine vorbestimmte Zwischentemperatur vor dem Schritt des Entfernens von Wasser und nach dem Schritt des Verdichtens des kohlendioxidreichen Flashstroms (54, 64 und 74) auf den vorbestimmten Zwischendruck.

12. Verfahren nach Anspruch 8, wobei der Schritt des Entfernens von Wasser das Entfernen von Wasser aus dem kohlendioxidreichen Flashstrom (54, 64 und 74) mit einem ersten adsorbierenden Material beinhaltet, das in einer Entwässerungseinheit (90) enthalten ist und wirksam zum Adsorbieren von Wasser ist, und wobei die Entwässerungseinheit (90) auch ein zweites adsorbierendes Material enthält, das wirksam zum Adsorbieren von Schwefelwasserstoff ist, und das Verfahren ferner den Schritt des Entfernens von Schwefelwasserstoff aus dem kohlendioxidreichen Flashstrom mit dem zweiten adsorbierenden Material in der Entwässerungseinheit (90) umfasst.

13. Verfahren nach Anspruch 1, wobei der Schritt des Abscheidens des Sauergases von dem Syngas das Abscheiden von Schwefelwasserstoff aus dem Syngas in einem ersten Gasabsorber (12), um einen zwischenbehandelten Syngasstrom zu bilden, der in Fluidverbindung mit einem zweiten Gasabsorber (14) steht, und das Abscheiden von Kohlendioxid von dem zwischenbehandelten Syngasstrom (18) in dem zweiten Gasabsorber (14) mit dem absorbierenden Lösungsmittel, um den kohlendioxidreichen Lösungsmittelstrom (24) zu bilden, beinhaltet.

14. Verfahren nach Anspruch 13, ferner umfassend den Schritt des fluidischen Verbindens des Restgasstroms (152, 153) mit dem zweiten Gasabsorber (14), um mindestens einen Anteil des behandelten Syngasstroms (22) zu bilden.

15. Verfahren nach Anspruch 1, wobei der Schritt des Fraktionierens des abgekühlten expandierten kohlendioxidreichen Flashstroms (135) das Bilden des kohlendioxidsuperreichen Produktstroms (150) beinhaltet, der eine Temperatur von -40°C oder weniger aufweist.

16. Verfahren nach Anspruch 1, ferner umfassend den Schritt des Verdichtens des kohlendioxidsuperreichen Produktstroms (150) auf einen Druck von 13.500 kPa oder mehr.

17. System (10) zum Entfernen von Sauergas, das Kohlendioxid aus Syngas aufweist, wobei das System umfasst:
ein absorbierendes Lösungsmittel;
mindestens einen Gasabsorber (14), der zum Abscheiden des Sauergases von dem Syngas (16) unter Verwendung eines absorbierenden Lösungsmittels konfiguriert ist, um einen behandelten Syngasstrom (22) und einen kohlendioxidreichen Lösungsmittelstrom (24) zu bilden;
mindestens eine Kohlendioxid-Flashtrommel (46, 48 und 50) in Fluidverbindung mit dem mindestens einen Gasabsorber (14), die konfiguriert ist, um Kohlendioxid und Restgas aus dem kohlendioxidreichen Lösungsmittelstrom (24) zum Bilden eines kohlendioxidreichen Flashstroms (54, 64 und 74) abzudampfen;
mindestens einen Verdichter (68, 78 und 84) in Fluidverbindung mit der mindestens einen Kohlendioxid-Flashtrommel (46, 48 und 50), der konfiguriert ist, um den kohlendioxidreichen Flashstrom (54, 64 und 74) auf einen vorbestimmten hohen Druck zu verdichten;
mindestens eine Kühleinheit (70, 80, 86, 134 und 136) und einen Expander (133), die miteinander und mit dem mindestens einen Verdichter (68, 78 und 84) in Fluidverbindung stehen, wobei mindestens eine Kühleinheit (70, 80, 86, 134 und 136) und der Expander (133) zusammenwirkend konfiguriert sind, um den kohlendioxidreichen Flashstrom (54, 64 und 74) auf eine vorbestimmte niedrige Temperatur und Druck zu kühlen und zu expandieren, um einen abgekühlten expandierten kohlendioxidreichen Flashstrom (135) zu bilden; und
eine Fraktioniereinheit (142) in Fluidverbindung mit dem Expander (133), die konfiguriert ist, um den abgekühlten expandierten kohlendioxidreichen Flashstrom (135) zum Bilden eines kohlendioxidsuperreichen Produktstroms (150) und eines Restgasstroms (152) zu fraktionieren.

18. System (10) nach Anspruch 17, ferner umfassend eine Entwässerungseinheit (90) in Fluidverbindung mit dem mindestens einen Verdichter (68, 78 und 84) und der mindestens einen Kühleinheit (70, 80, 86, 134 und 136), wobei die Entwässerungseinheit (90) zum Entfernen von Wasser aus dem kohlendioxidreichen Flashstrom (54, 64 und 74) konfiguriert ist.

19. System (10) nach Anspruch 18, wobei die Entwässerungseinheit (90) als eine Schwenkbettanordnung (92) konfiguriert ist, die mindestens zwei Kessel (94 und 96) umfasst, wobei die mindestens zwei Kessel (94 und 96) jeweils ein erstes adsorbierendes Material und ein zweites adsorbierendes Material enthalten, die wirksam zum Entfernen von Wasser bzw. Schwefelwasserstoff aus dem kohlendioxidreichen Flashstrom (54, 64 und 74) sind.

20. System nach Anspruch 17, wobei der mindestens eine Gasabsorber (14) einen ersten Gasabsorber (12) und einen zweiten Gasabsorber (14), der mit dem ersten Gasabsorber (12) in Fluidverbindung steht, umfasst, wobei der erste Gasabsorber (12) zum Abscheiden von Schwefelwasserstoff aus dem Syngas (16) konfiguriert ist, um einen zwischenbehandelten Syngasstrom (18) zu bilden, und der zweite Gasabsorber (14) zum Abscheiden von Kohlendioxid aus dem zwischenbehandelten Syngasstrom (18) unter Verwendung des absorbierenden Lösungsmittels konfiguriert ist, und wobei der zweite Gasabsorber (14) in Fluidverbindung mit der Fraktioniereinheit (142) steht, um den Restgasstrom (152, 153) aufzunehmen.

## Revendications

1. Procédé pour l'élimination de gaz acide comprenant du dioxyde de carbone de gaz de synthèse, le procédé comprenant les étapes consistant à :
séparer le gaz acide du gaz de synthèse (16) à l'aide d'un solvant absorbant pour former un flux de gaz de synthèse traité (22) et un flux de solvant riche en dioxyde de carbone (24) ;
vaporiser de façon instantanée du dioxyde de carbone et du gaz résiduel à partir du flux de solvant riche en dioxyde de carbone (24) pour former un flux de vaporisation instantanée riche en dioxyde de carbone (54, 64 et 74) ;
comprimer le flux de vaporisation instantanée riche en dioxyde de carbone (54, 64 et 74) à une pression élevée prédéfinie ;
refroidir et détendre le flux de vaporisation instantanée riche en dioxyde de carbone (54, 64 et 74) à de basses température et pression prédéfinies pour former un flux de vaporisation instantanée riche en dioxyde de carbone refroidi et détendu (135) ; et
fractionner le flux de vaporisation instantanée riche en dioxyde de carbone refroidi et détendu (135) pour former un flux de produit ultra-riche en dioxyde de carbone (150) et un flux de gaz résiduel (152).

2. Procédé selon la revendication 1, dans lequel l'étape consistant à comprimer le flux de vaporisation instantanée riche en dioxyde de carbone (54, 64 et 74) consiste à comprimer le flux de vaporisation instantanée riche en dioxyde de carbone à la pression élevée prédéfinie de 5500 à 7600 kPa.

3. Procédé selon la revendication 1, dans lequel l'étape consistant à refroidir et détendre le flux de vaporisation instantanée riche en dioxyde de carbone (54, 64 et 74) consiste à refroidir le flux de vaporisation instantanée riche en dioxyde de carbone à une température inférieure ou égale à -40 °C.

4. Procédé selon la revendication 1, dans lequel l'étape consistant à refroidir et détendre le flux de vaporisation instantanée riche en dioxyde de carbone (54, 64 et 74) consiste à détendre le flux de vaporisation instantanée riche en dioxyde de carbone à une pression de 4100 à 4900 kPa.

5. Procédé selon la revendication 1, dans lequel l'étape consistant à fractionner le flux de vaporisation instantanée riche en dioxyde de carbone refroidi et détendu (135) consiste à former le flux de gaz résiduel (152) comprenant du gaz choisi dans le groupe constitué par l'hydrogène, le monoxyde de carbone, le méthane et les mélanges de ceux-ci.

6. Procédé selon la revendication 1, dans lequel l'étape consistant à fractionner le flux de vaporisation instantanée riche en dioxyde de carbone refroidi et détendu (135) consiste à former le flux de produit ultra-riche en dioxyde de carbone (150) ayant une teneur en dioxyde de carbone supérieure ou égale à 99,5 % en mole.

7. Procédé selon la revendication 1, dans lequel l'étape consistant à fractionner le flux de vaporisation instantanée riche en dioxyde de carbone refroidi et détendu (135) consiste à former le flux de produit ultra-riche en dioxyde de carbone (150) ayant 100 ppm de monoxyde de carbone ou moins.

8. Procédé selon la revendication 1, comprenant en outre l'étape consistant à éliminer de l'eau du flux de vaporisation instantanée riche en dioxyde de carbone (54, 64 et 74) avant l'étape consistant à refroidir et détendre le flux de vaporisation instantanée riche en dioxyde de carbone (54, 64 et 74).

9. Procédé selon la revendication 8, dans lequel l'étape consistant à éliminer de l'eau consiste à éliminer de l'eau du flux de vaporisation instantanée riche en dioxyde de carbone (54, 64 et 74) de façon telle que le flux de vaporisation instantanée riche en dioxyde de carbone (54, 64 et 74) a 5 ppm d'eau ou moins.

10. Procédé selon la revendication 8, comprenant en outre l'étape consistant à comprimer le flux de vaporisation instantanée riche en dioxyde de carbone (54, 64 et 74) à une pression intermédiaire prédéfinie avant l'étape consistant à éliminer de l'eau.

11. Procédé selon la revendication 10, comprenant en outre l'étape consistant à refroidir le flux de vaporisation instantanée riche en dioxyde de carbone (54, 64 et 74) à une température intermédiaire prédéfinie avant l'étape consistant à éliminer de l'eau et après l'étape consistant à comprimer le flux de vaporisation instantanée riche en dioxyde de carbone (54, 64 et 74) à une pression intermédiaire prédéfinie.

12. Procédé selon la revendication 8, dans lequel l'étape consistant à éliminer de l'eau consiste à éliminer de l'eau du flux de vaporisation instantanée riche en dioxyde de carbone (54, 64 et 74) avec un premier matériau adsorbant qui est contenu dans une unité de déshydratation (90) et qui est efficace pour l'adsorption d'eau et dans lequel l'unité de déshydratation (90) contient également un second matériau adsorbant efficace pour l'adsorption de sulfure d'hydrogène et le procédé comprenant en outre l'étape consistant à éliminer du sulfure hydrogène du flux de vaporisation instantanée riche en dioxyde de carbone avec le second matériau adsorbant dans l'unité de déshydratation (90).

13. Procédé selon la revendication 1, dans lequel l'étape consistant à séparer le gaz acide du gaz de synthèse consiste à séparer du sulfure d'hydrogène du gaz de synthèse dans un premier absorbeur de gaz (12) pour former un flux de gaz de synthèse traité intermédiaire qui est mis en communication fluidique avec un second absorbeur de gaz (14) et séparer du dioxyde de carbone du flux de gaz de synthèse traité intermédiaire (18) dans le second absorbeur de gaz (14) avec le solvant absorbant pour former le flux de solvant riche en dioxyde de carbone (24).

14. Procédé selon la revendication 13, comprenant en outre l'étape consistant à mettre en communication fluidique le flux de gaz résiduel (152, 153) avec le second absorbeur de gaz (14) pour former au moins une partie du flux de gaz de synthèse traité (22).

15. Procédé selon la revendication 1, dans lequel l'étape consistant à fractionner le flux de vaporisation instantanée riche en dioxyde de carbone refroidi et détendu (135) consiste à former le flux de produit ultra-riche en dioxyde de carbone (150) ayant une température inférieure ou égale à -40 °C.

16. Procédé selon la revendication 1, comprenant en outre l'étape consistant à comprimer le flux de produit ultra-riche en dioxyde de carbone (150) à une pression supérieure ou égale à 13 500 kPa.

17. Système (10) pour l'élimination de gaz acide comprenant du dioxyde de carbone de gaz de synthèse, le système comprenant :
un solvant absorbant ;
au moins un absorbeur de gaz (14) conçu pour séparer le gaz acide du gaz de synthèse (16) à l'aide du solvant absorbant pour former un flux de gaz de synthèse traité (22) et un flux de solvant riche en dioxyde de carbone (24) ;
au moins un ballon de vaporisation instantanée de dioxyde de carbone (46, 48 et 50) en communication fluidique avec l'au moins un absorbeur de gaz (14) et conçu pour vaporiser instantanément du dioxyde de carbone et du gaz résiduel à partir du flux de solvant riche en dioxyde de carbone (24) pour former un flux de vaporisation instantanée riche en dioxyde de carbone (54, 64 et 74) ;
au moins un compresseur (68, 78 et 84) en communication fluidique avec l'au moins un ballon de vaporisation instantanée de dioxyde de carbone (46, 48 et 50) et conçu pour comprimer le flux de vaporisation instantanée riche en dioxyde de carbone (54, 64 et 74) à une pression élevée prédéfinie ;
au moins une unité de refroidissement (70, 80, 86, 134 et 136) et un détendeur (133) qui sont en communication fluidique l'un avec l'autre et avec l'au moins un compresseur (68, 78 et 84), l'au moins une unité de refroidissement (70, 80, 86, 134 et 136) et le détendeur (133) étant conçus en coopération pour refroidir et détendre le flux de vaporisation instantanée riche en dioxyde de carbone (54, 64 et 74) à de basses température et pression prédéfinies pour former un flux de vaporisation instantanée riche en dioxyde de carbone refroidi et détendu (135) ; et
une unité de fractionnement (142) en communication fluidique avec le détendeur (133) et conçue pour fractionner le flux de vaporisation instantanée riche en dioxyde de carbone refroidi et détendu (135) pour former un flux de produit ultra-riche en dioxyde de carbone (150) et un flux de gaz résiduel (152).

18. Système (10) selon la revendication 17, comprenant en outre une unité de déshydratation (90) en communication fluidique avec l'au moins un compresseur (68, 78 et 84) et l'au moins une unité de refroidissement (70, 80, 86, 134 et 136), l'unité de déshydratation (90) étant conçue pour éliminer de l'eau du flux de vaporisation instantanée riche en dioxyde de carbone (54, 64 et 74).

19. Système (10) selon la revendication 18, dans lequel l'unité de déshydratation (90) est conçue sous forme d'un agencement modulé de lits (92) qui comprend au moins deux cuves (94 et 96), les au moins deux cuves (94 et 96) contenant chacune un premier matériau adsorbant et un second matériau adsorbant qui sont efficaces pour l'élimination d'eau et de sulfure d'hydrogène, respectivement, du flux de vaporisation instantanée riche en dioxyde de carbone (54, 64 et 74).

20. Système selon la revendication 17, dans lequel l'au moins un absorbeur de gaz (14) comprend un premier absorbeur de gaz (12) et un second absorbeur de gaz (14) qui est en communication fluidique avec le premier absorbeur de gaz (12), le premier absorbeur de gaz (12) est conçu pour séparer du sulfure d'hydrogène du gaz de synthèse (16) pour former un flux de gaz de synthèse traité intermédiaire (18) et le second absorbeur de gaz (14) est conçu pour séparer du dioxyde de carbone du flux de gaz de synthèse traité intermédiaire (18) à l'aide du solvant absorbant et dans lequel le second absorbeur de gaz (14) est en communication fluidique avec l'unité de fractionnement (142) pour recevoir le flux de gaz résiduel (152, 153).
